# EUROPEAN PATENT APPLICATION

(11) **EP 1 798 945 A1**
(43) Date of publication of application: **20.06.2007**
(21) Application number: 06024688.1
(22) Date of filing: 29.11.2006
(51) Int. Cl.: H04M 3/56

(54) **System and methods for enabling applications of who-is-speaking (WIS) signals**

(30) Priority: 13.12.2005 US 302860
(71) Applicant: Alcatel Lucent, 75008 Paris (FR)
(72) Inventor: Wengrovitz, Michael S., Concord, MA 01742 (US); Gupta, Siddhartha, Needham, MA 02492 (US)
(74) Representative: Schäfer, Wolfgang

(57) **Abstract**

A system for enabling controlled application of derived who-is-speaking indications related to activity of participants to a live multiparty communications conference or recorded outputs. The system includes a first node hosting a conference bridging switch, software or a combination thereof, having multiple conference input channels; a second node having data access to at least an output signal port of the conference bridging switch, software, or a combination thereof, and a software application distributed wholly to the first or second node, or in parts to the first and second node. The application is used to apply the who is speaking indications to output communications, data files, or data streams, forwarded to one of, a select potion of, or combination of, the conference participants, non-participant third parties, and one or more storage facilities.

## Description

### BACKGROUND OF THE INVENTION

### Field of the Invention

The present invention is in the field of analog and digital communications and pertains particularly to a system and methods for using data about who is speaking in a communications conference. This invention enhances business use of real-time identification of participants in live or recorded conferences

### Discussion of the State of the Art

The field of telephony communications has undergone and continues to undergo many developments and improvements relating to improved quality and usefulness of communications applications, including both software and hardware products.

One such development is the advent of conference bridges developed to enable multiparty communications conferences inclusive of participants utilizing a variety of devices connected to the network from various network locations and from potentially disparate network segments. Conference bridges are known in the art to utilize multiple input/output channels to bridge conference participants together by mixing one or more participant inputs so that an output signal sent back to each participant that may be inclusive of collective input signals of the participants. In this way all connected parties may hear all other connected parties during the session. Conference bridging may be practiced in conjunction with a pure data packet network, or in conjunction with analog carriers using a combination of hard and soft switching. For example, one party may be accessing the bridge using an Internet protocol (IP) telephone, or using an IP telephony application in a computing device, while another uses a cellular telephone, while yet another accesses the conference session using a plain old telephony service (POTS) telephone.

State-of-art network communication gateway services have advanced to the point of allowing seamless communication provided that the connected devices support bi-directional audio communication. In addition, a participant may participate with more than one device such as a desktop computer and a telephone for example. The telephone and computer provide multi-link capability for working with audio and graphics for data collaboration and the like. In many cases, telephony conferencing is practiced using a computer telephony integrated (CTI) telephony access point such as a private branch exchange (PBX) system or a private access branch exchange (PABX) system. Digital signal processing (DSP) can be used to combine data for output to participants whether those participants are accessing from an analog carrier network or from a digital carrier network.

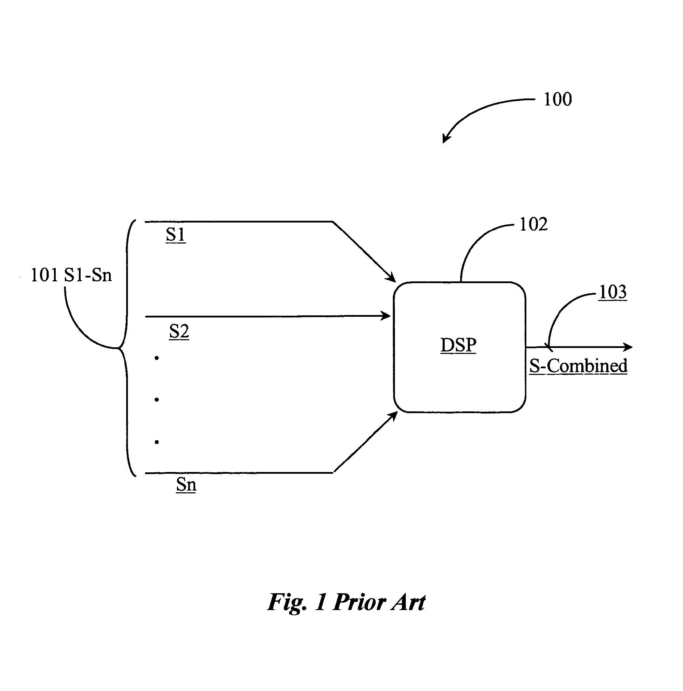

Fig. 1 illustrates simple input signal architecture 100 and signal processing used in a typical conference bridge. Architecture 100 includes multiple signals from multiple inputs 101 (1-n), also represented in Fig. 1 as signal S1, S2 and S-n of n signals. There may be many separate input signals into a conference bridge dependent upon the number of channels available to the bridge. One conference bridge can support a number of simultaneous conference sessions operating in parallel, although typically participants in one conference will not be able to hear participants in another conference.

In practice, each analog input signal 101 (1-n) is digitized, normalized and combined or summed together as discrete time signals using a DSP facility 102 or a real-time computation engine. The resulting output signal is a mixed signal 103 that includes all of the inputs from all of the participants as those inputs occurred. Signal 103 is then transmitted to the various participants in the session, via conversion to analog or digital signals sent over a telephone network or, in some cases, as a digital packet stream sent over a data packet network (DPN). In some cases, an input stream into a conference bridge may be digital stream. The exact state and conversion process (analog to digital or digital to analog) depends on the carrier networks and end devices used by the conference participants.

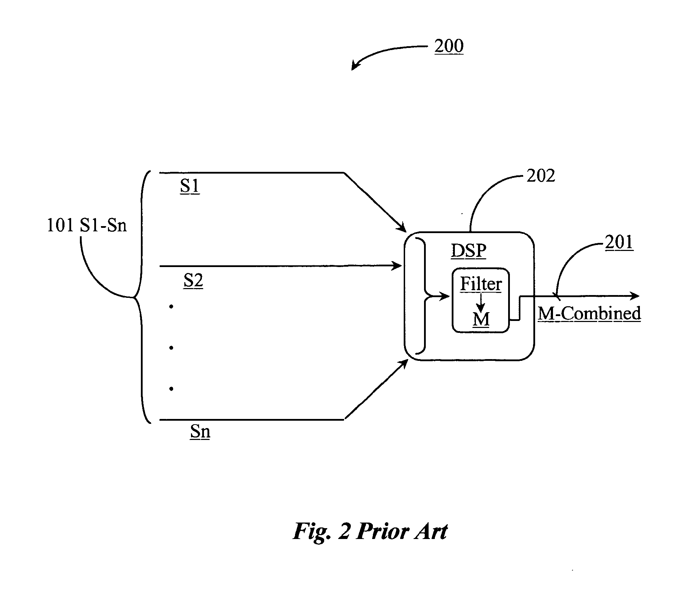

Fig. 2 illustrates a simple input signal architecture 200 and signal processing used in a typical conference bridge where all of the conference inputs are not summed together, but rather just the few strongest input signals. In this case, a DSP facility 202 has a filter for retaining only the M strongest inputs or channels at any given time during the session. The few strongest channel inputs are combined (M-combined) and are then output to all of the participants. This streamlined approach follows the probability that only one or a few speakers are actively conversing at any one time during the session. Background noise and weaker input signals are filtered out in order to increase overall audible quality of the session output stream.

One challenge that exists with the practice of telephony conferencing in current art systems is that of providing all of the conference participants with a reliable and timely real time indication of who is currently speaking at any point in time during an active conference in session. In practice, an association may be made between an identifiable conference channel and an identifiable conference user on the input side of the bridge. However, once multiple users are speaking it is difficult to accurately distinguish from the mixed signal result stream those separate identities with relevance to what is being said or spoken, and by whom at any time during the session.

Further, another challenge relates to who said what and when it was said, while reviewing conference session recordings, such as the transcribed text of a session, or an actual archived audio recording of the session. It is appreciated by the inventors that reliable and time-sensitive determination of who is saying what or "Who is Speaking" (WIS), or who was speaking at a specific time during a live multi-party conference session, whether live or recorded, may be a complex process relying on complex algorithmic functions. Likewise, pre-determination techniques, like channel assignment to conference users, do not always provide the most reliable information, or ways to propagate that information to those that may require it or are otherwise authorized to obtain it.

The inventors recognize that determination of WIS in a conference is not just a function of real-time data aggregation and serving, but also lends necessity to other applications that may use the WIS information, for example, after a session has been conducted and archived. Third-party analysis of an archived session might be required for employee training purposes, or for legal research, or the like. Moreover, every participant of a session may not be equally authorized to "know" certain information spoken or who exactly spoke that information. Prior art conferencing systems fail to fully utilize all of the 'who is speaking' information that can be made available as a result of a conference session that is in progress or has already taken place.

Therefore, what is clearly needed in the art is a system and methods for enhancing the business use of who is speaking and related presence information resulting from active multi-party conferencing conducted over a network between conference participants. A system such as this would solve the above-stated problems in the art and would increase conference productivity and improve and streamline numerous post-conference business practices.

### SUMMARY OF THE INVENTION

According to an embodiment of the present invention, a system is provided for enabling controlled application of derived who-is-speaking indications related to activity of participants to a live multiparty communications conference or recorded output thereof. The system includes a first node hosting a conference bridging switch, software or a combination thereof, having multiple conference input channels, a second node having data access to at least an output signal port of the conference bridging switch, software, or a combination thereof, and a software application distributed wholly to the first or second node, or in parts to the first and second node, the application used to apply the who is speaking indications to output communications, data files, or data streams, forwarded to one of, a select potion of, or combination of, the conference participants, non-participant third parties, and one or more storage facilities.

In one embodiment, the first node is a dedicated conference bridging facility and the second node is one of a desktop computer, or a data server. In another embodiment, the first node is a PBX switch, and the second node is a desktop computer. Also in one embodiment, the system is hosted on a digital network. In one embodiment, the who-is-speaking indication includes, in addition to identification information, presence information or a locator thereto, the presence information relevant to the identification information. In a variation to this embodiment, the system further includes rich who is speaking information or a locator thereto, the rich who is speaking information wholly or partly derived from recorded activity of the identified participant over the duration of one or more conference sessions.

In one embodiment, the output communications are instant messages containing text of the conference content. In one embodiment, the data files are text transcriptions of the conference output. In one embodiment, the data streams are really simple syndication (RSS) feeds. In another embodiment, the data streams are audio streams or audio/video streams.

According to another aspect of the present invention, an audio content transcription and annotation system is provided for rendering annotated text transcription of live or recorded speech from a multiparty conference session enabled by a conference bridging switch, software, or a combination thereof having multiple conference input channels and for annotating the transcribed text files with who-is-speaking data. The system includes an input port for receiving the audio content, a time synchronization module for recording temporal offsets of changes in a channel activity signal relevant to conference session run time, a channel to speaker association module, and a text annotation engine. In a preferred embodiment, the transcribed text files are annotated according to indication of signal changes over time with relevance to audible words, phrases or segments of the content found within the scope of time periods existing in between the signal changes.

In one embodiment, the who-is-speaking indication includes, in addition to identification information, presence information or a locator thereto, the presence information relevant to the identification information. In an enhanced variation of this embodiment, the system includes rich who is speaking information or a locator thereto, the rich who is speaking information wholly or partly derived from recorded activity of the identified participant over the duration of one or more conference sessions.

In yet another aspect of the present invention, a method is provided for transcribing and annotating live or recorded speech from a multiparty conference session enabled by a conference bridging switch, software, or a combination thereof having multiple conference input channels, the annotations indicative of who-is-speaking. The method includes steps for (a) receiving the speech files for text transcription; (b) accessing a channel activity signal temporally associated with the speech files; (c) inserting fields or place holders into the documents during text transcription, the fields or placeholders inserted according to time of occurrence in the document, (d) retrieving channel-to-speaker association data for each field or placeholder, and (e) inserting the annotations into the appropriate fields.

In one aspect of the method, in step (e) the annotations further include presence information about the speaker, or a locator thereto, the presence information including but not limited to contact information. According to an enhancement of this aspect, in step (e) the annotations further include rich who is speaking information about the speaker, or a locator thereto, the rich who is speaking information including, but not limited to statistics related to speaker activity over the duration of one or more than one conference.

In still a further embodiment of the present invention, a system is provided for searching conference archives for information relevant to recorded content of a multiparty conference, the record temporally annotated with speaker identification and other information or locators thereto. The system includes a first node hosting a search engine and interface, a second node capable of accessing the first node over a network, and at least one repository containing the conference records in the form of transcribed text files linked or not linked to appropriate multimedia audio files or audio/video files, characterized in that information searched may include speaker identifications using content keywords or phrasing as input, instances of repeated content spoken by a speaker using a combination of speaker identification parameters and content keywords or phrasing as input, and rich presence information including statistics using speaker identification as input.

In one embodiment, the searched information is returned as a list of one or more interactive results further optimized by additional interactive links to additional information relevant to the results. In one embodiment, the list of results include identified speaker links and the additional information linked to for each result includes all or some of contact information, qualification information, and statistical information relevant to the speaker compiled from his or her past conference activity. In one embodiment, the results link to actual conference segments of transcribed text or actual multimedia files.

### BRIEF DESCRIPTION OF THE DRAWING FIGURES

Fig. 1 is a block diagram illustrating typical input/output signal processing of a conference bridge according to prior art.

Fig. 2 is a block diagram illustrating typical signal processing where only the strongest signals are mixed and rendered as output according to prior art.

Fig. 3 is an architectural overview of a communications network where multi-party conferencing and use of who is speaking data is supported according to an embodiment of the present invention.

Fig. 4 is a block diagram illustrating one function of the WIS Use Manager of Fig. 3 according to an embodiment of the present invention.

Fig. 5 is a block diagram illustrating an information search process enabled by the WIS Use Manager of Fig. 4 according to an embodiment of the present invention.

Fig. 6 is a block diagram illustrating a speech to text transcription service enabled by the WIS Use Manager of Fig. 3 according to another embodiment of the present invention.

Fig. 7 is a process flow chart illustrating steps for annotating conference multimedia materials or transcriptions according to an aspect of the present invention.

Fig. 8 is a process flow chart illustrating steps for preparing and submitting an information search of conference archives for WIS-related information according to an embodiment of the present invention.

### DETAILED DESCRIPTION

This invention provides a system and software application that enables real-time identification and multi-use propagation of who is speaking information and rich, or system-enhanced, presence information resulting from multi-party conference session activity practiced over a network. The system and methods of the present invention are detailed below.

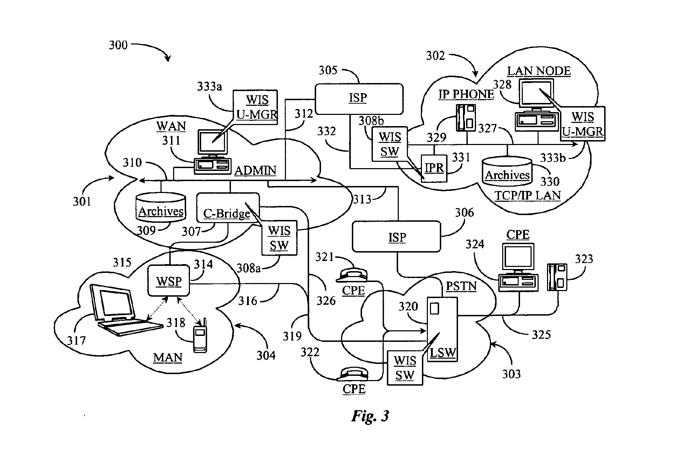

Fig. 3 is an architectural overview of a communications network 300 where multi-party conferencing and use of who is speaking data is supported according to an embodiment of the present invention. Communications network 300 is a conglomeration of communication sub-networks bridged together for enabling seamless voice-based communication between parties coming together through those networks. For example, a wide-area-network (WAN) 301 is illustrated in this example and represents any corporate private or public data packet network (DPN). WAN 301 may represent the well-known Internet network. Network 301 may be a wireless or wired metropolitan area network (MAN) segment without departing from the spirit and scope of the present invention. The inventor chooses the Internet as one preferred example of WAN 301 because of its high public access characteristics and because of its many standardized communications protocols.

A local area network (LAN) 302 is illustrated in this example and represents any corporate, private, or public LAN enabled, in this case for discussion purposes, for Transmission Control Protocol/Internet protocol (TCP/IP). LAN 302 may be wired or wirelessly accessed and may be a campus area network or some other network connected with an institution or business. LAN 302 may also be a private home network or other type of secured network. LAN 302 has communication access to WAN 301 through an Internet protocol router (IPR), illustrated herein as IPR 331, and an Internet Service Provider (ISP) illustrated herein as ISP 305. Therefore, nodes connected to LAN 302 may access any services or nodes within WAN 301 via IPR 331, network access line 332, ISP 305 and network cable 312, which connects to a network backbone 310 within WAN 301. Nodes illustrated as connected to a LAN backbone 327 for communications include an IP telephone 329 and a LAN computer 328. Backbone 310 represents, in a preferred embodiment, all of the lines, equipment, and access points making up WAN 301 as a whole. In the embodiment of the WWW, there are no geographic limitations to the practice of the present invention.

A public switched telephone network (PSTN) 303 is illustrated in this example and has access to WAN 301 via a local telephone switch (LSW) switch 320 and an Internet service provider (ISP) 306. ISP 306 connects to backbone 310 within WAN 301 via a network access cable 313. Access from PSTN 303 into WAN 301 may be accomplished in a number of different ways including, but not limited to, telephone modem, SS-7 Bell core gateway (not illustrated), cable modem, digital subscriber line (DSL), and so on.

A wireless network 304 is illustrated in this example and represents any wireless analog and or digital carrier network for telephony or data communications. Network 304 may be a cellular telephony network, a wireless local network, or a satellite-enabled network. Network 304 has communications access to network 301 and to PSTN network 303 via a wireless Internet service provider (WISP) facility 314 via network cable 315 and telephony cable 316 respectively. Appropriate network bridging facilities may be assumed to be present to enable standard communications between parties connecting to each other, the parties communicating from any of the illustrated networks. Those skilled in the art of data and telephony communications will appreciate that the illustrations of disparate networks in this example is meant to show that the present invention may be practiced over the implied network boundaries using voice and multimedia applications and the appropriate bridging facilities and network services without departing from the spirit and scope of the present invention.

A conference bridge (C-Bridge) hardware/software facility 307 is illustrated within the domain of WAN 301. Bridge 307 may be hosted by a service that is accessible through WAN 301 and to those accessing from any of the other illustrated networks. Access to bridge 307 is through backbone 310 in this example. Therefore, bridge 307 has a network address and that network address may also be associated to a telephone number for those that are using a telephone to dial into the bridge. Bridge 307 is adapted to host multi-party conferencing sessions using a soft switch approach whereby a maximum number of conference channels are available to those that will participate in a conference using the bridge.

Bridge 307 may be hosted by an enterprise as a communications service as described above. An administrative workstation (ADMIN) 311 is illustrated as connected to backbone 310 and may be assumed an administrative station for setting up, managing, and, perhaps moderating multi-party multimedia conferences scheduled for or otherwise facilitated by bridge 307. Station 311 may be assumed to provide all of the necessary tools and interfaces for carrying out required tasks for managing bridge 307 both administratively and from a maintenance standpoint.

A mass data repository 309 is illustrated within the domain of WAN 301 and has connection to backbone 310 for access. Repository 309 is adapted to where house multi-party conference archives. Such archives may include text transcriptions of sessions hosted at bridge 307 and/or multimedia recordings of the conference including audio and any associated multimedia presentations, video or displays presented during the conference. A conference service host may minimally include bridge 307, station 311, and repository 309 to practice the present invention. However, those skilled in the art will appreciate that other equipment may also be present in this system architecture without departing from the spirit and scope of the present invention, such as data servers, automated voice attendants (hardware or software), network bridging facilities, and the like.

In one embodiment of the present invention, a host through bridge 307 enables multi-party conferencing as described whereby services are available to users connecting to the bridge from any of the described networks 301-304 using a variety of devices and end protocols. For example, within network 304, a network-capable, laptop computer 317 and a wireless network-capable telephone 318 are illustrated as devices that users may employ to connect to conference bridge 307 from an access point within network 304. Telephone 318 may be a cellular telephone capable of both analog and digital communication. Telephone 318 may also be a satellite phone in some embodiments, or a 3^{rd} generation (3-g) smart telephone in other embodiments. For example, telephone 318 may, in digital mode, connect to WISP 314 and subsequently be routed to bridge 307 over network line 315 using voice over Internet Protocol (VoIP). Similarly, in analog mode telephone 318 may be connected to bridge 307 through a Bell core gateway adapted to convert analog signals to data packets and the reverse for seamless voice communication.

Laptop 317 may, if equipped with an IP telephony application, may establish a voice connection to bridge 307. In one embodiment, a user may employ telephone 318 to enable voice communication with bridge 307 while using laptop 317 to display a multi-media presentation that is part of the conference. Likewise, a number of combinations exist with respect to a same device such as a 3-g smart phone adapted to enable simultaneous voice and multimedia data transfer over separate channels supported by the device.

Users within PSTN 303 are illustrated as customer premise equipment (CPE). A CPE telephone 321 and a CPE telephone 322 are illustrated in this example and represent standard connection orientated switched telephony (COST) or plain old telephony service (POTS) telephones. Telephones 321 and 322 connect to LSW 320, which routes their calls over line 319 to bridge 307 using the appropriate signal conversion like Bell Core signaling. From the points of CPE 321 and CPE 322, the connection to bridge 307 is a dedicated COST connection at least from LSW 320 to the respective telephones. A desktop computer CPE 324 and an associated telephone 323 are also illustrated in the domain of PSTN 303 as communications devices capable of forming a communications connection with bridge 307 within the domain of WAN 301. Telephone 323 may be a COST telephone or an IP telephone. LSW 320 represents a local switch adapted to route communications. CPE 324 and telephone 323 may connect to WAN 301 and subsequently to bridge 307 through LSW 320, ISP 306 over network access line 313 and backbone 310. It will be appreciated by those skilled in the art that the exact path including digital and analog portions of a connection may include other routers, switches, and the like, not illustrated herein. The inventor shows a simple example of connective network architecture for explanatory purpose only, and there are other possibilities.

WAN-based computer station 311 has a "Who is Speaking" Use Manager (WIS U-MGR) 333a provided and executable within as a software application. WIS U-MGR 333a is adapted to enable an administrator to set up a conference session and to enable a multitude of varied uses for the information relevant to who is speaking during the conference session. WIS U-MGR 333a can be used both in real-time as a session is conducted and for post session tasks that might be carried out by a third-party service or administrative moderator of the conference session.

C-Bridge 307 has a WIS software (SW) application 308a provided and executable within. WIS SW 308a is adapted, in this embodiment, as a client application to WIS U-MGR 333a and may cause performance of or direct certain tasks related to processing and propagating WIS information during run time of a conference session or during more than one conference sessions operating in parallel. SW applications 333a and 308a together enable smart business use of WIS signaling derived from an active conference session through algorithmic digital signal processing and association of identification information to the WIS signal on a temporal basis.

A version of WIS U-MGR 333b is illustrated as installed on and executable from LAN node 328. Likewise, a version of WIS SW 308b is illustrated as installed on and executable from IPR 331. A mass repository 330 is illustrated as connected to LAN backbone 327 for data storage and access. U-MGR 333b, WIS SW 308b and repository 330 represent copies of or like instances of elements 333a, 308a, and 309 illustrated within the domain of WAN 301. Therefore, the methods of the present invention may be hosted on a LAN connected to an IP WAN wherein conference participants may be bridged within IPR 331 much in the same fashion as in conference bridge 307. In actual practice, IPR 331 may be adapted as a router and a conference bridge in one embodiment. There are many possible implementations.

It is noted also in one embodiment, a version of WIS U-MGR 333c and a version of WIS SW 308c may be provided within the domain of PSTN 303, for example WIS SW 308c is installed in LSW320 and U-MGR 333c is installed on CPE computer 324. In this case, LSW would be CTI-enhanced and controlled from an enterprise. An enterprise switch such as a private branch exchange (PBX) may also be enhanced to provide WIS data. Therefore, the present invention may also be practiced within the domain of PSTN 303 with conferences hosted by LSW 320 also adapted as a conference bridge, or by a PBX hosted within an enterprise. Moreover, an instance of WIS U-MGR based in one network may interact with an instance of WIS SW installed in a switch, router, or other conferencing facility physically located in another network. There are many possibilities including remote management scenarios.

In a preferred embodiment, a host using a version of U-MGR 333 (a, b, or c) may control various aspects of using WIS information for run-time applications and post session applications. One embodiment includes propagating WIS information as presence information (PI) output that may be temporally synchronized (time-stamped) with the conference session video and audio output during runtime. The presence information is, in this case, pre-determined and pre-formatted at the point of the conference host facility (bridge, router, or switch) and the information is caused to automatically combine at CPE with the incoming conference stream.

The term presence information (PI) is loosely associated with the acronym WIS because an indication of who is speaking provided in real time embedded in or associated with the conference output stream indicates presence of the speaker at any given time. WIS data may, by default include just the first and last name of the speaker, the speaker's title, and the speaker's organization, if applicable. Rich Who-is-Speaking data (RWIS) of the speaker may also include one or more contact parameters like a telephone number and extension and/or e-mail address. Additional information may also include a Web site address or other secondary or indirect contact information.

Before WIS data may be utilized successfully, of course, an association must be made between stronger channel signals (indicative of one or more active speakers), and the identification of those speakers.
Identifying a speaker may be accomplished in several ways.
For example, every person that calls in, for example, to participate in a scheduled conference may be automatically assigned an available conference channel or seat.
Identification and association of a particular speaker to an assigned channel may be accomplished by using automated number identification (ANI) so the speaker is identified by the origination number the speaker is calling from. In another example, each participant invited to join the session is given a unique password or access code to join the conference and a seating (channel) can be associated with each access code. In another case, a version of destination number identification service (DNIS) may be used to associate a participant with a particular channel.
In yet another embodiment, a live operator or an interactive voice response (IVR) service may assign the channels or seats to each participant that registers for a planned conference and at the time of assignment, participant identification may be recorded and associated to the assigned seat.

Once the identification and channel or seat associations are set for each participant, then as those speaker-identified channels become active during the conference, the time signature of those signals may be used to correlate to what was said or the content of the session. WIS U-Manager 333 (a-c) may be used, according to several embodiments, to propagate the WIS data back to all, or a select portion of the conference participants. For example, real-time instant messages (IM) or short message service (SMS) messages may be sent out to a participant list every time there is a speaker change. In one embodiment such messages may only indicate the current speaker and the audio provides the content wherein the speaker change indication is in near real time with the spoken audio content received. In another example, a CPE interface or received IM or SMS messages may include the transcript of what is said along with the indication of who is currently speaking. This embodiment requires near real time transcription of the session if it is an audio or video/audio session. In still another embodiment, the transcription along with WIS indication is formatted as a really simple syndication (RSS) feed subscribed to by any of the participants. It is noted herein that the receipt of transcribed audio of a session along with embedded indication of who said what may be delayed somewhat or displayed in near real time. The rendition may take the form similar to a running transcription of a text chat.

Transcription and WIS annotation thereof may occur post runtime in one embodiment using a playback module and a running time recording of the channel activity signal played synchronously with the playback of the session. In this case, WIS U-MGR 333 (a-c) may include a version of WIS SW 308 (a-c) that may be employed any time after a session has been conducted and recorded in order to transcribe the session and to determine who was speaking during the session. The data may be stored separately or it may be combined as an annotated transcription, or it may be embedded into the multimedia files themselves as a reference during future playback of those files.

In one embodiment, conference participants may be allowed to set preferences for receiving WIS indication as text indication, audio indication, or visual indication. For visual indication, an icon representing an M number of channels or conference seats may be caused to change shape, color, form, or other visual indication from an inactive to active state to indicate who is speaking. The displayed icons would, of course carry the identification of the speaker in some manner as a name associated with the icon. A session may begin with only one icon displayed and identified as soon as a first person speaks. As more speakers contribute the number of icons occupying the display may increase such as when two speakers are conversing back and forth to one another, but only iconic morphing or visual indication practiced by the icon of the current speaker at any given time would reflect the instant speaker that is active.

In an embodiment wherein the conference is hosted in a LSW such as a LSW 320, for example, the appropriate CTI network data link may be required from a CTI-PBX hosted within an enterprise to the switch in order to reach the conference participants using network-capable devices or peripherals to receive WIS indication during a COST oriented teleconference, for example. The PBX might also provide WIS information via the CTI link or via an alternate signaling method.

Mass repositories 309 and 330 are adapted for storage and access of conference archives that may be actual multimedia recordings or transcribed text versions as described above. A conference may be recorded, transcribed, and stored for later access. Using near run time transcription with speech to text rendering and WIS indication, transcriptions of conference sessions may be annotated to include WIS indications for each phrase transcribed or, with more granularity, each word transcribed during the session. In one preferred embodiment, such records may be searched for specific sound bites or text portions according to WIS or "who was speaking" input and other parameters including content, time stamp, or the like. It is noted herein that in a search of conference archives, WIS data may submitted to return results containing all or a portion of what a particular speaker said. Likewise, the content itself may be used as input to return results containing WIS data. Furthermore, a combination of input may be used to return relevant results.

Once WIS SW instances 308(a-c) are pre-configured then they may automatically run in the background to determine WIS data and to propagate that data to participants according to plan. In yet another embodiment, rich presence information may be made accessible to participants authorized to receive WIS data during a session or in a post session package sent to them after a session has occurred. In this case, WIS SW 308 (a-c) may be enabled to monitor session WIS results in order to calculate certain statistics that may be compiled with presence information to provide rich presence information for users that may be interested in or otherwise authorized to receive the information. It is important to note herein that specific functions or tasks relevant to the present inventive system may be enabled using WIS SW (308) or may be enabled using WIS U-MGR (333) or may be enabled by strategically sharing those tasks or functions between the applications. More detail about methods of using WIS data is provided later in this specification.

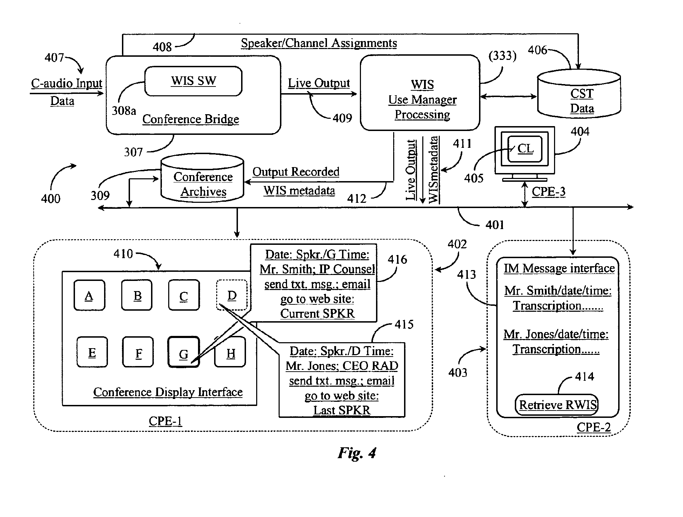

Fig. 4 is a block diagram illustrating WIS architecture 400 including component interactions according to an embodiment of the present invention. Architecture 400 includes conference bridge 307, WIS SW 308a, WIS U-MGR (333) and mass repository 309 described with reference to Fig. 3 above. In this example, it may be assumed that the conference bridge, WIS enhancement, and conference archiving, is performed by a host enterprise providing services to clients. However, this should not be construed as a limitation as the system of the invention may be practiced in a corporate environment for internal conferencing and meetings, in a public environment including education, or in an ad hoc embodiment wherein the system may be used by a network of users not particularly bound to any company, organization or the like rather brought together by some common social interest.

In this example, conference bridge 307 accepts conference input (C-input) and additional informative data from every participant when they are connected to the bridge. Every participant has some identification parameter and channel assignment before the conference actually begins as scheduled. If someone joins the conference late, then that identification and channel or seat assignment for that person is recorded before that person becomes active in the conference. WIS SW 308a in conference bridge 307 may, in one embodiment, be adapted solely to gather any informative data and channel or seat assignment data for each user on the input side before the conference is scheduled to begin or at any time a user joins a running conference session. In this embodiment, WIS SW 308a may then send the information over a data link 408 to a channel speaker table (CST) 406 adapted to maintain current user/speaker/channel assignments. CST data 406 may include, but is certainly not limited to first name, last name and channel or seat assignment. The information may be stored as paired tuples for later access. This embodiment assumes that each user registered to participate should maintain his or her channel assignment for the duration of the session. If one user leaves early his or her channel or seat should not be re-assigned, especially if historical data searching is later conducted on session archives. However, if WIS SW 308a is responsible for channel or seat assignment, it can periodically check to see if a person has dropped out of the session and can then update CST data 406 by deleting the former paired tuple for that user. When a new user then joins, the channel or seat may be re-assigned without effecting future tasks. In one embodiment, CST table 406 may also contain, or reference, additional data such as contact information and other data that may be associated to a speaker. This additional data may be used to enhance simple WIS data by providing more information about the speaker or Rich Who-is-Speaking (RWIS) data.

In this embodiment, live output 409 of a conference is session is fed into WIS U-MGR (333). The output does not contain any additional data or user identifications. The live output does contain a temporal indication of which of assigned channels are currently active (an indication that the assignee of that channel is currently speaking). In this case, WIS U-MGR (333) obtains the signal of the active channel or channels and performs a lookup in CST data 406 and obtains the speaker channel identification and time stamps that information according to the time span of the signal. That is to say if a particular channel is currently active in the output, the correct speaker assigned to that channel is identified and a time-stamped record is created correlating the speaker identification to that particular channel. When that channel is replaced by another channel, the lookup is performed again for that channel, and so on. The frequency with which the output can be sampled enables a lookup and record every 100 msec for example. So any change in WIS indication may be represented with a granularity that is more than adequate for any conference scenario. Exemplary frequencies at which WIS indication may change from one speaker to another are several times to 10 times per second or more.

In the case of speaker-dependant voice recognition, speaker dependent training data would be provided to and would therefore be known to the system and could be leveraged to aid the voice-to-text transcription. In this case, the WIS U-MGR would utilize the time-dependent who is speaking information to suitably select the speaker-dependent training data as a function of time.

WIS U-MGR (333) may append or tag discreet time records with RWIS information of the referenced speaker such that an end user may retrieve that data through interaction with an interactive link. Output from WIS U-MGR (333) may be split and recorded into repository 309 as output stream 412 along with being delivered as output stream 411 over a network 401 to all or a select portion of participants according to planned delivery format, which may vary somewhat dependant on CPE devices used to receive the output stream.

The term Rich Who-is-Speaking data is loosely associated with any data about a speaker over and above minimum identification required to determine "Who-is Speaking". Some RWIS data may already be known by the system before a scheduled conference runs. Some RWIS data may be derived by WIS U-MGR (333) while processing over the span of a conference session. RWIS data previously known to the system may include any information that the speaker or the organization sponsoring the speaker might be made available. In addition to first name and last name, the speaker's title, email address, telephone number and extension, IM handle, Web address, Company name, Political identity, statement of expertise, list of reference, list of publications authored, and so on. Such RWIS data may be embedded as metadata tags or as an interactive hyperlinks so that one interacting with the visual indication of the speaker as an annotation to a text record of the session, or as an embedded visual graphic, or as an iconic mutation, may by mouse over or click through, obtain the additional information in the same or in some other interface or application vehicle.

To further elaborate, CPE-1 (402) is illustrated as one CPE device receiving output stream 411. CPE-1 (402) may be a desktop graphical user interactive display (GUID) occupying the screen of a desktop computer or Laptop computer. In this example, a conference display interface 410 is illustrated and contains icons A through H representing channels assigned to speakers during the conference session. Icon G is currently bolded indicating that channel G is active and the speaker is Mr. Smith who is IP Counsel for a company associated with the conference subject. A pop-up message 416 contains the interactive RWIS data options such as send text message, email, navigate to Web site, and that Mr. Smith is the current speaker. Icon D represents the last active channel and speaker using an interactive pop up message 415. The last speaker was Mr. Jones, CEO of a company RAD. A participant may click to send a text message to Mr. Jones, or an email, or perhaps navigate to the RAD Website. Pop-up message 415 indicates that Mr. Jones was the last speaker before Mr. Smith spoke.

In another embodiment, an instant message interface 413 is illustrated running on a CPE-2 device (403). Device 403 may be any type of device that supports instant messaging including a PDA, a cellular telephone, or any network-capable computing body with a display capable of displaying text and in some cases, graphics. IM interface 413 illustrates a running transcription of the conference output including WIS indication annotated to the transcribed content. In this case, Mr. Smith is indicated as the last speaker along with the date and time he spoke followed by the transcription of what he said. Mr. Jones is identified as the current speaker with the date and time visible followed by the transcription in progress of what he is saying. IM interface 413 includes interactive indicia 414, labeled retrieve RWIS data or options for retrieving RWIS data or options on either Mr. Smith, Mr. Jones, or both. Selecting or highlighting by mouse over, one or both speaker indicators and then selecting indicia 414 may enable retrieval of rich information associated to that speaker. Selecting the link, in one embodiment, may produce an interactive listing of what RWIS data is available. Then by selecting the appropriate offerings, the RWIS data, which may include communication links, may be served, formatted for the capabilities and configured services of device 403.

In one embodiment, a CPE-3 (404) is illustrated as having access to backbone 401 and therefore to conference archives 309. CPE-3 (404) has a client software application 405 provided thereto and adapted to enable the operating user to search the contents of repository 309 for any data or content returnable as a result of entering WIS data in addition to, separate from, or in combination with data parameters like date, time, session ID, speaker ID, and channel ID. The actual RWIS data may include data that may already be known about the subject speaker, or that may be delivered to the system by a conference participant or solicited from a third party entity. Using the example of Fig. 4, RWIS data relevant to Mr. Smith as an IP counsel or attorney may include education references or other resume information.

RWIS data for Mr. Smith might include a record of litigation successes and a list of clients. In one embodiment, Optimized Who-is-Speaking (OWIS) data may be provided using the system of the present invention. OWIS data, for the purpose of this specification, is data that is derived through WIS processing during one or more conference sessions that by nature is statistical or historical and related to conference participation or activity or system observations of the speaker during conference participation, and not otherwise available before a conference. For example, Mr. Jones might have a conference history of advocacy for a certain political or moral position or point of view that may be discussed or may be at issue during one or more conference sessions. Such OWIS data may be a subject of a search of conference archives. For example, an advocacy group may want to find a dynamic speaker who is an attorney that might be available to speak at a live event. By typing in the issue title and participant title, and some relevant keywords like for or against, the group may conduct a search of the archives wherein the results returned include conference speakers, who are attorneys, that have spoken for or against the issue, Mr. Smith being one of those results returned. There are many business processes that could benefit from the ability to use WIS information, RWIS information and OWIS information as subjects for search or as variables to search archives for relevant information.

In still another example, OWIS information may include the portions identified of the speaker's collective oratory during the conference that were more passionate than other portions of the same speaker or other speaker's oratorical portions. In this respect, decibel monitoring of the signal may indicate such passion or emotion, which may be determined using a threshold table or expression engine, as anger, fear, jubilance, or just passionate oratory. A conference participant that does not have access to the audio of the conference, but has a running text interface might be enabled to determine the emotion from the speaker by including those portions (OWIS) in the form of all capital letters in certain text appearing the interface. Emotion icons commonly used in chat interfaces to express different emotions of a participant might be embedded in certain sections or portions of a conference transcription (real time or recorded) so as to identify emotion within a paragraph, a phrase, or a single word.

In one embodiment of the present invention, WIS U-MGR (333) may use data processing to enhance signal processing to enable modification, moderation or alteration of a speakers output relevant to certain other participants so as to prevent it from being disseminated during playback, or otherwise cause it to be partially or wholly unrecognizable to all or to a select portion of conference participants during a live session. For example, using WIS data, a moderator may cause the conversation between Mr. Smith and Mr. Jones in the conference to be unintelligible or silent to participants A-C, E, F, and H. For example, the conference may be a licensing meeting including due diligence inquiry into Mr. Jones's practices relevant to the R&D portfolio and Mr. Smith may be Mr. Jones's IP attorney chosen to represent the company's interest in any possible agreement.

In the above embodiment what is said and who is saying it may be quite as important as what is heard or not heard relevant to the conversations between Mr. Smith and Mr. Jones. To enable the moderator to alter the activity between Mr. Jones and Mr. Smith in near real time with reference to the other channels all that is required is the indication that the only role Mr. Smith has during the conference is to provide counsel to Mr. Jones. Therefore, whenever Mr. Smith's channel becomes active, the signal output to the other participants with the exception of Mr. Jones is immediately distorted before send for the period of time that Mr. Smith's channel is active. Subsequently, when Mr. Jones's channel becomes active within a pre-determined time period after Mr. Smith speaks (indicative of a response to Mr. Jones), the signal output is distorted before send to the other participants with the exception of Mr. Smith for the duration of that channel active state. Therefore the output signal is generally altered, distorted, or otherwise disrupted during output from the bridge to all of the participants except that signal routed back to a person or persons authorized to hear the content.

There may be some slight delay in output for the described channels to ensure the security measure. In one embodiment, this capability might be pre-programmed to run automatically with reference to monitoring and implementation either by WIS-U MGR (333) or by WIS SW (308). In addition, any transcription attempted during the live session would be programmed not to occur for back and forth conversation between Mr. Smith and Mr. Jones. However, other conference participants may still be visually aware through their interfaces that the private conversations are occurring at times during the session, even though they cannot disseminate the content of those conversations during live interaction. The aforementioned embodiment is also practical in a scenario where two or more of the conference participants are judges of a contest and the participants are competing against each other. It may be desired that the conversations among the judges only be heard by the other judges, but not by the participants. There are many possible and variant applications.

In one embodiment enhanced signal processing may include quality control measures for sending clearer output back to conference participants. Gain, equalization, and noise cancellation, may all be controlled in reference to a single speaker or selected speakers during a conference. Because the signal activity is pertinent to a channel assigned to or otherwise associated with a conference participant, participants who are not speaking but otherwise have noisy input signals may be automatically excised from the overall output.

With respect to post conference recordings or audio tracks, enhanced digital signal processing may use WIS data to enable quick "cleaning" or "audio enhancements" made to segments in the recording or batch of recordings. In one example, a goal may be to eliminate a certain speaker's audio output from the record. A value system might be employed using a digital signal processing engine capable of indexing the WIS embedded tags or references. For example, a given audio file or track recorded with multiple channels active, would be segmented according to WIS data. In a simple example, consider that a recording has 4 different speakers (channels) and measurable audio segments or portions of the recording may be identified that feature one of those speakers. Assume the goal is that speaker 2 of the four speakers needs to be removed from the entire record.

A DSP engine may be pre-programmed to set an audio volume of nominally "1" to a value of "0" in any segments or audio portions in the recording identified as speaker 2 output. The finished recording would not be audible to third parties with respect to the portions attributed to speaker 2. Likewise, volume levels could be raised or lowered for certain speakers. For example, multiplying a common value of "1" 2 times would double the volume for a speaker, and halving the value of "1" would halve the level. By virtue of being able to reference the WIS tags, the DSP engine can quickly run through a recording and make a series of pre-programmed changes to the portions of interest to the studio operator. The changes may include, but are not limited to implementing noise reduction, audio distortion, and controlling bass levels, treble levels, gain, echo, and other audio properties. Other schemes may also be used without departing from the spirit and scope of the present invention.

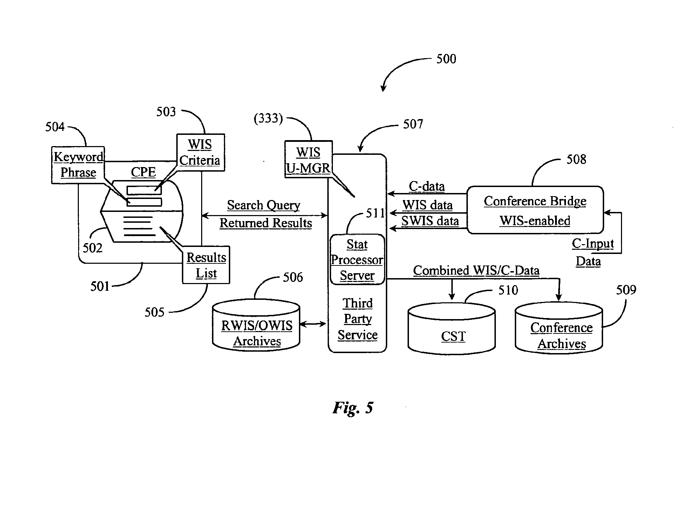

Fig. 5 is a block diagram illustrating an information search architecture 500 enabled by WIS U-Manager (333) according to an embodiment of the present invention. Architecture 500 is supported, generally in this embodiment, by a conference bridge 508, a third-party service or host node 507, and a CPE user 501. CPE 501 is in this example, a desktop computer capable of accessing the prevailing network. CPE 501 has a search engine interface 502 displayed thereon the computer's graphics monitor. CPE 501 may connect to third-party node 507, which may be a server, online through normal circumstance. In this example, node 507 is adapted to process and record conference output from conference bridge 508 simultaneously, in most cases, with the output sent to conference participants.

Node 507 receives the conference signal, WIS data records co-relatable to the signal by time, and the RWIS data, if available, of each identified speaker. WIS-U MGR. (333) leverages a statistical processor/server 511 to process the incoming signal and data for any OWIS data that may be derived. Part of the processing includes annotating the record to reflect WIS data embedded into or combined with the recorded archive. This information may be stored in repository 509. In addition, a CST may be stored for reference in repository 510. Any OWIS data relevant to any of the active speakers may be stored for reference in repository 506 adapted for storing RWIS and OWIS archives that are co-relatable to the identified speakers of the conference. OWIS data may include data describing, for example, the ratio of participation input of individual ones of identified speakers comparative to all of the other identified speakers that were active during the course a specific conference, or of a series of archived conferences. The percentage may be broken down per conference and may also be averaged over many conferences for those speakers if there are several, or more than one conference archived featuring those speakers.

There are different ways that the recorded and annotated conference information may be archived for searching. For example, complete conference transcriptions of an audio conference may be stored with annotations identifying the authors of the included text (speakers) and tags included in those annotations that link to the speakers. Such annotations may include the speaker name, title, conference date, and the time (duration) that the annotated text was spoken by the speaker on the conference date. This WIS information is searchable by all, one or a combination of its parts. So entering the conference date and a specific time range the speaker or speakers that spoke within that time range on that date are identifiable, thus the transcription of what was said is identifiable and can be used to, in addition, return a multimedia segment representing the searched transcription. Secondary presentations like Power Points^{™} or other presentations are also co-relatable to the conference record by time so the portion of the presentation relevant to the speaker or speaker's transcription can be made a part of the returned search result.

Interface 502 which may be served to CPE 501 by node 507 has one or more search term data entry fields. In this case there are 2 entry fields, one field 503 for entering RPI type criteria, and a field 504 for entering descriptive keywords and phrases. Additional fields for narrowing or refining a search of archives may be provided without departing from the spirit and scope of the present invention. For example, a user operating interface 502 may narrow a search to a specific conference archive by entering the conference identification number, the date and time that the conference was held, or simply the title of the conference. More than one conference archive can be included in a single search by listing the conference titles or identification numbers, or by specifying a date and time range to include all conference archives falling within the scope of the range specified. A user may also search all conference archives.

Using an example of WIS criteria and keywords, a user may enter "speaker" in entry field 504 and "above 50% active" in the field 503 to search all conference archives for speaker names. A results list 505 is returned that includes links to all of the speakers whom participated above a 50% threshold averaged over all of the conference archives. The result for a speaker may also include contact information, a list of conferences participated in, the links to transcribed text authored by that speaker for each conference, and links to the audio and or audio/video clips of the conference archives featuring the speaker.

In another embodiment, a studio application is used to prepare the clips as required from the actual conference multimedia presentation in a fashion viewable on a multimedia software player installed on CPE 501. In a preferred embodiment, actual text from a conference is searchable by phrase and keyword wherein the WIS information (speaker identification) may be used also as search criteria. For example, an investment compliance auditor may search a conference archive or series of archives to determine if a particular trader advocated the sale of, or simply mentioned the availability of a particular stock. For example, the keyword or stock name for "National" and the trader's name can be used to return all text containing the word National wherein the WIS annotation identifies the particular trader as the author of the text result. Transcribed text containing the name "National" but not associated with WIS data identifying that trader as the author would not be returned.

In one embodiment, WIS U-MGR (333) searches the transcribed conference data against the entered criteria and accesses the channel signal information annotated to the text selections to determine which conference channel was responsible for the text found for each result considered. Then as an optimization of results, the software references CST 510 to determine the channel speaker association of the speaker referenced in the search criteria and eliminates all those results not associated with the proper channel indication and returns only the results indicating the channel of the referenced speaker. In another embodiment, all of the information is included as metadata attached to each identifiable transcription noted by annotation and stored as an annotated transcript. PI available about the referenced speaker may also be available in the results as well as links to the actual multimedia segments for retrieval and playback. There are many possibilities.

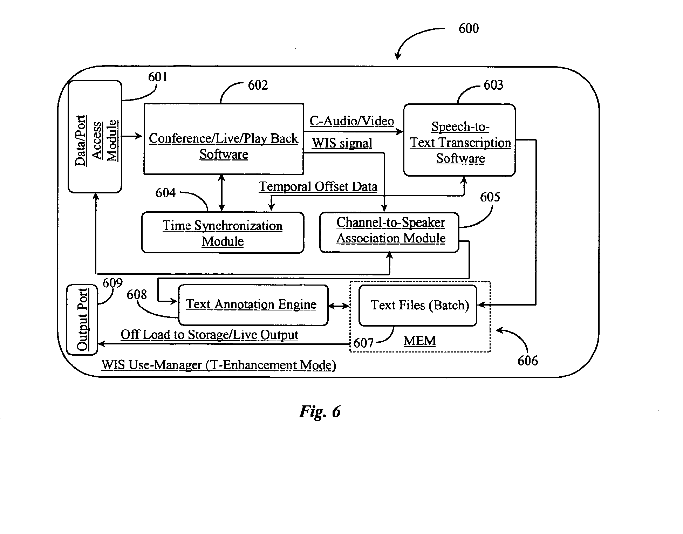

Fig. 6 is a block diagram illustrating a speech to text transcription system 600 enabled by the WIS Use Manager of Fig. 3 according to another embodiment of the present invention. System 600 may be part of WIS U-MGR (333) executable on an appropriate piece of computing hardware with access to conference output and access to a storage medium like a mass repository adapted to store annotated transcriptions of conference output. System 600 has an input/output (I/O) data port 601 adapted to enable access and retrieval of conference multimedia recordings. A software playback module 602 is provided as part of system 600 and is adapted for playing the downloaded conference files for post conference transcription.

In this embodiment, the WIS signal and the conference audio/video is diverted into a time synchronization module 604 provided within system 600. Time synchronization module 604 notes the temporal offset of each change in channel or seat indication and creates a record that can be synchronized to the conference audio/video playback. The audio/video is sent to a speech to text transcription module 603 provided within system 600 and enhanced with voice recognition technology (VRT) and a suitable semantic database (not illustrated). Synchronization module 604 provides the temporal offset data for each change in channel activity. The temporal offset data indicates the identification of an active channel with reference to the beginning of the recorded conference (conference start time) channel A may be active at time (t) 0; channel B might take over at the point of t 60 sec; channel A may take over again at t 90 sec. And so on. It is important to note herein that more than one channel may be active at a same time when speakers overlap or more than one speaker is speaking at the same time. In this case, channel AB may both be active at t 2:30 sec. where a change could mean one of the two channels drop off while the other remains. Therefore at t 3:00 channel A may disappear indicating a temporal change that corresponds with the time-based transcription. It is noted herein that more than one speaker may actually be talking at the same time therefore, the transcription reflects overlapped speech by time-based indication.

System 600 includes a channel-to-speaker (CST) association module 605. Module 605 is adapted to associate the speaker indication to each channel or seat reference indicated in the WIS signal completing the WIS data portion for submission to a text annotation engine 608.
Transcription module 603 outputs transcribed files including temporal offset data as text files 607. Files 607 are temporarily stored in a memory (MEM) adapted for the purpose. The temporal offset data may be provided as embedded markers or placeholders, or as part of a file index referencing the appropriate insertion points for inserting annotations. Text annotation engine 608 accesses the transcribed files serially and annotates those files with the appropriate speaker (WIS) indication at the appropriate points in each file. Annotated files are then offloaded to storage as complete and searchable text transcriptions of conference recordings. In addition to annotating the transcribed files with WIS information, annotation engine 608 may also attach metadata or links to RWIS data known about each speaker and that data may be returned in addition to simple WIS indication during a search operation performed on the files. OWIS data may also be included in the metadata attached.

In one embodiment, system 600 may be pre-programmed to operate during a live conference session in "run-time" mode. In this embodiment, playback software 602 would not be required as the input stream would be the live output signal of the conference bridge. Also in this embodiment, the annotated text files may be forwarded to all, or a select portion of the conference participants with some transmission delay compared to the bridge audio/video output. This may be particularly useful if one or more of the participants is deaf, or operating a device that is better suited for receiving text files. The received text files may be interacted with, in one embodiment while online, by clicking on or mousing over the inserted annotation to order additional RPI data relevant to a speaker or to contact and communicate with that speaker. In some variations of this embodiment, some or all of the data associated with an annotation may be embedded in the document but hidden from view until a user interacts with an annotation, which may cause the associated data to pop up on the user display screen as a pop-up message or on some other visual screen, data box, or space of the document such as on the tool bar. There are many possibilities that may be implemented without departing from the spirit and scope of the present invention.

It will be apparent to one with skill in the art that the system of the present invention may be provided as an implement of software resident on a single node or as more than one cooperating portion of software, each portion resident on a same node or distributed to separate but connected nodes without departing from the spirit and scope of the present invention. Certain components such as MEM 606, ports 601, and 609 may be generic to the node that hosts the software, the software leveraging those components in the course of various tasks performed.

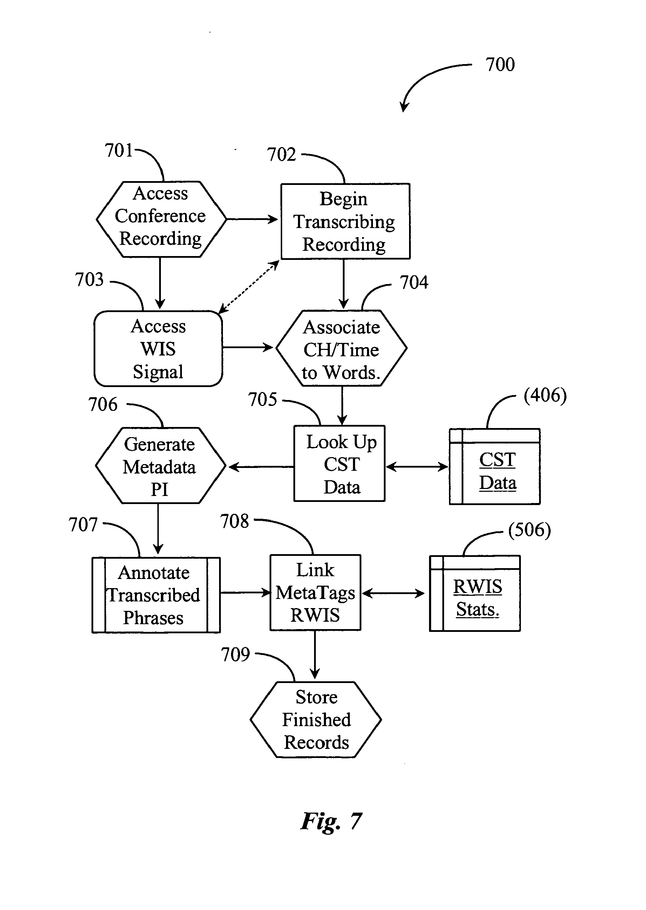

Fig. 7 is a process flow chart 700 illustrating steps for annotating conference multimedia materials or transcriptions according to an aspect of the present invention. At step 701, the annotation system analogous to system 600 of Fig. 6 accesses a conference recording. In one embodiment the system may intake a live conference stream. In another embodiment, the system and software or a functional portion thereof, may be resident in a conference bridge, which may be modified to practice the invention. As long as the conference output may be accessed whether live or a recording, transcription and annotation of the content may be performed.

At step 703, the channel or "WIS" signal is accessed, preferably in synchronization with the content signal. The WIS signal may only contain indication of active channels or it may include WIS data if, for example, speaker dependent algorithms are used to identify speakers and those speakers have pre-submitted voice samples, that may be used to identify them. In this case channel or seat pre-assignment may be unnecessary to derive the WIS data. This example assumes that conference participants are preassigned seats or channels that are identifiable as signals in a mixed signal.

At step 702, the system begins transcribing the conference multimedia audio content. At step 704, utilizing the WIS channel signal indication, the system associates identifiable active channels to the content of the transcribed text according to discrete time signaling. For example, at t 5 minutes into the audio content, spoken words transcribed into text will correspond to at least one channel that is found active at that time, an indication of which seat or channel authored the transcribed content. The system records temporal changes in this activity indicating when one speaker stops and another starts. The association may be accomplished by tagging method or by inserting annotation fields or placeholders, which will later be populated during annotation. The association may be actual or virtual without departing from the spirit and scope of the present invention.

At step 704 the content is transcribed and ready for annotation. In this step an annotation engine, or in one embodiment, a live annotation operator, performs a series of database lookups using a data table analogous to CST 406 described with reference to Fig. 4 above, in order to associate the appropriate speakers to the channel signal identification indicated by the annotation fields or placeholders. This process may be wholly automated in preferred embodiments. In one embodiment, the annotated fields contain only the speaker identification associated with the transcribed text that was determined authored by that speaker. This is sufficient to complete the annotation process thereby providing WIS information is association to the spoken, and in this case, transcribed content.

Optionally, at step 706, the annotation engine may further provide presence information metadata that links to information about identified speakers above and beyond simple identification. That metadata may occupy the same annotation fields or placeholders as the appropriate speaker identification data. In this way, a mouse-over of the field may cause additional information (RWIS data) like contact information, company information, and the like to appear in some visible form to a user working with the transcribed documents. Steps 705 and 706 may be pre-annotation steps conducted for each disparate annotation field in a document or in a series of documents.

At step 707, the annotation engine annotates or inserts the appropriate speaker information and optionally, the metadata, into each found field or placeholder found in the transcribed text. In one embodiment, a further annotation step 708 is practiced in conjunction with step 707 whereby each metadata set of presence information is tagged or otherwise linked to additional information (OWIS data) that may be stored separately from the text transcriptions, but accessed through interaction with individual ones of the annotations. The OWIS may include such as conference participation statistics collected by the system for conference speakers over time including the duration of a single conference or over a series of conferences in which the speaker was identified. One example of OWIS data might be that the particular speaker enjoyed an average approval rate of 90% related to agreement with or validation of contributed content matter of the speaker as judged by the other conference participants. Another statistic might be that a particular speaker was confrontational with other conference participants 60% of the time he spoke during a conference or over the period of several conferences. There are many possibilities. Accessing OWIS data such as that described for any speaker that authored content in a conference can be used in one embodiment, to help train the speaker for future interaction. Furthermore, OWIS data may include behavioral as may have been observed and recorded during a conference session. Certain emotions like anger, fear, jubilance, and the like may be perceived in real time using such as voice inflection analysis, volume monitoring, and so on. The data compiled can then be rendered in the transcribed record as a visual indicator such as all capital letters for a text portion covered by an angry rant, for example. Emotion icons may also be attributed to embedded WIS data in certain segments where emotion was implied or detected. One benefit in incorporating the emotional states if any of speakers into the record is that the emotion-bearing segments can be isolated quickly during a search of the conference archive.

The above-described capability may be useful, for example, in post analyzing to isolate from recorded audio or transcribed text files, the most controversial exchanges that occurred in the conference, which might be equated to the most controversial aspects of, say a proposal, or a proposed set of resolutions, or policy changes that may have been the subject of the conference. Likewise, the capability may be useful for those who do not have access in real time to the audio portion of a conference. In this way, they may still experience the emotional aspects through their text interfaces.

At step 709, the finished and annotated records may be stored into a repository adapted for the purpose and which may be made accessible to other parties for business uses like quickly determining by enhanced search method who said what and at what time, how many instances was it said, and so on.

It will be apparent to one with skill in the art that the exact order and content of the steps of this example may vary somewhat without departing from the spirit and scope of the present invention depending on what options are selected during pre-program or instruction preparation of the annotation process and what end result may be desired. Essentially, the basic requirements are that the system determines who spoke what portion of the total transcribed context of the audio portion of a multimedia conference signal (recorded or live) and inserts or associates an indication thereof to those exact portions in the transcribed text.

In still another embodiment, process 700 may include one or more steps for altering, mutating, or simply not rendering transcription of certain portions of the audio content if for security, privacy, or other concerns dictate that portion should be stricken from the record or otherwise recorded but rendered illegible in transcription. Likewise, this process may be performed in the recording process or on the live stream before transcription by quality of service manipulation in transmission or by signal altering.

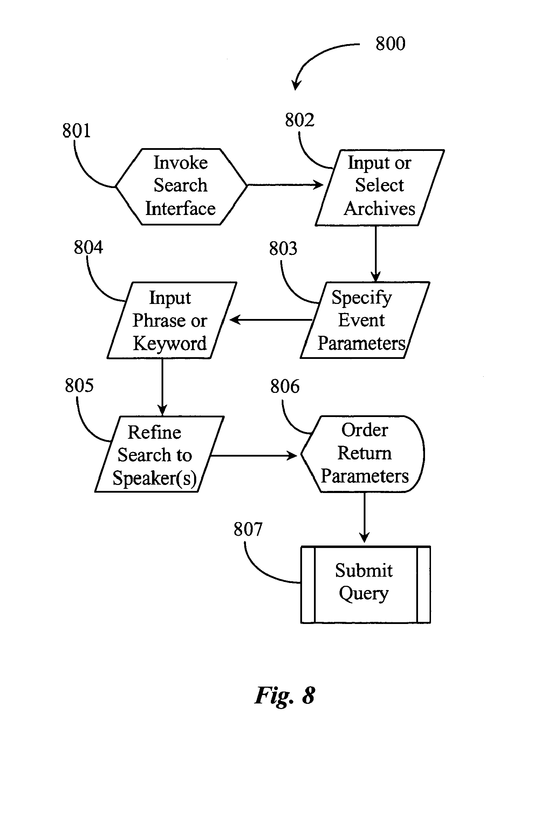

Fig. 8 is a process flow chart 800 illustrating steps for preparing and submitting an information search of conference archives for WIS-related information according to an embodiment of the present invention. At step 801, a user invokes a search engine interface adapted to search conference archives using any one or a combination of keywords, phrasing, temporal data, WIS data, and presence information. The interface may be one hosted by a third-party service also hosting the conferencing services. A user may navigate for example, to a Web site in order to access the interface.

At step 802, the user may input data identifying which conference archives to search, or simply select from a list of conference archives published to include them in the information search. In this step, a conference archive is meant to denote one repository or portion or partition thereof in which one or more conference records is stored. The plural term archives, denotes more than one database partition, portion or repository holding conference records. For example, research and development conferences may be stored in one sector while sales and customer service conferences are stored in another sector. Furthermore, it may be that actual multimedia records are stored separately from and linked to text annotations of the same content.

At step 803, the user may specify conference event parameters such as conference titles, conference dates, and time windows. For example, a user may search for information that might exist multiple times in a conference record or wherein instances of the information span more than one conference. So by selecting an archive and then specifying a date, all of the conference records of that date stored in that archive would be included in the search. In one embodiment, all conference records available may be searched for information using one search operation.

At step 805, after having defined the search area, the user may input phrasing or one or more keywords to initiate a search within the defined area. In one embodiment, a user may further refine the area of the search by limiting the scope to content authored by a particular speaker. At step 806, a user may order return parameters like "return in a form accepted by AdobeTM publisher". In another embodiment, a user may submit an order to play audio clips on demand, the clips associated by linking to transcribed text sections or portions. At step 807, the user may submit the query to the third-party node hosting the search. Results returned may vary according to the goal of the information search. The goal of the information search may be multi-faceted. For example, results may indicate who and how many instances a speaker said "sell National" in one or more conference records. Another search result may indicate the speaker who said "order and system" in a particular phrase that may be contained in a particular research and development conference record. By specifying a speaker as input, the search operation may return all of what the speaker said within the area defined for the search.

Those skilled in the art of information searching will recognize that there are many ways to combine query inputs in order to have specific information returned as result data. Those skilled in the art will also recognize that results may be broadly scoped or narrowed according to specific input. In one embodiment, results returned to a user include links to other information stored in association with the returned results. For example, if a particular phrase like "we recommend Alpha stock" is spoken by more than one speaker over several conference records, using the phrase as input for the search would return all of the speakers that used the phrase or a variation of it and each result may provide further information about the identified speaker like contact information, resume data, employment longevity, or any other pre-associated information. Moreover, statistical data may be compiled on each conference speaker and appended to the WIS data so that the further information includes the statistical data or at least a navigable link or tag to enable instant access to it.

One with skill in the art will recognize that in addition to enhanced information search capability and speech-to-text transcription capability, there are other enhancements and services that may be realized from the practice of the present invention. For example, speech to text transcribing may be enhanced to include language dependent translation to enable multi-party conference output recognition when the speakers are not all speaking the same language. In this embodiment, conference input for M speakers can be in the natural language of those speakers. A speaker-to-language (STL) table may be provided in addition to or in integration with a CST such as CST 406 described further above, to not only identify who is speaking but also to identify the natural language of those speakers so that the conference output may be translated in real time or in transcription so that from the recipients view, all of the other speakers appear to be speaking his or her language whether the received conference output is translated synthesized voice, or translated text received in instant message interface, or via an RSS feed or the like.

One with skill in the art of data storage will recognize that there are a variety of ways that may be developed or may otherwise be leveraged for storing WIS data, subsequently retrieving the data and referencing it efficiently with audio/video or transcribed conference content. In one such application a WIS signal is stored separately from the audio video signal of a conference recording as discrete time signals, two separate files synchronously associated.

In another embodiment, WIS data may be embedded within the conference audio/video file as a series of chunk tag values. The chunks might be represented in variable lengths that change for each speaker. Each chunk would be tagged with the appropriate WIS data. In yet another embodiment, robbed bit signaling can be used in the audio waveform to include WIS data. In this case, the least significant bit of the data portion of the file can be infrequently to reflect the appropriate WIS data because the WIS data changes at a much slower rate than the audio signal.

Considering a 24-bit WIS signal and saving the audio portion using 8-bit words sampled at the rate of 8 KHz, then the actual modification of the audio signal once every 32 frames, for example, would suitably represent the entire WIS signal and would not audibly affect the quality of playback. Furthermore, the playback software for playing the audio does not require modification. A separate decoder may be provided to extract the WIS signal from the embedded audio. Video may also be treated in this method such that by manipulating frames to present such as in multiple visual software windows, the audio can be heard, the current speaker's picture can be displayed in one window, and the visual part of any graphics presentation may be displayed in the other window of the playback software.

The following features, separately or in any combination, may also constitute advantageous embodiments of the described or claimed invention:
- The claimed and/or described system, wherein the first node is a dedicated conference bridging facility and the second node is one of a desktop computer, or a data server.
- The claimed and/or described system, wherein the first node is a PBX switch, and the second node is a desktop computer.
- The claimed and/or described system, hosted on a digital network.
- The claimed and/or described system, further including rich who is speaking information or a locator thereto, the rich who is speaking information wholly or partly derived from recorded activity of the identified participant over the duration of one or more conference sessions.
- The claimed and/or described system, wherein the output communications are instant messages containing text of the conference content.
- The claimed and/or described system, wherein the data files are text transcriptions of the conference output.
- The claimed and/or described system, wherein the data streams are really simple syndication (RSS) feeds.
- The claimed and/or described system, wherein the data streams are audio streams or audio/video streams.
- The claimed and/or described system, wherein the list of results include identified speaker links and the additional information linked to for each result includes all or some of contact information, qualification information, statistical information relevant to the speaker compiled from his or her past conference activity.
- The claimed and/or described system, wherein the results link to actual conference segments of transcribed text or actual multimedia files.

The methods, system, and apparatus of the present invention can be practiced in multiple variant communications architectures using multiple and different devices without departing from the spirit and scope of the present invention. Likewise, the present invention may be provided using some, a combination of, or all of the described components without departing from the spirit and scope of the invention. Multiple business uses for WIS determination and application may be conceived, many of which have already been described herein, a select portion or a totality thereof enabled from a single point of control. The present invention, in light of the many practical and described embodiments described above, should be afforded the broadest scope under examination. The present invention shall be limited in scope only by the following claims.

## Claims

1. A system for enabling controlled application of derived who-is-speaking indications related to activity of participants to a live multiparty communications conference or recorded output thereof including:
a first node hosting a conference bridging switch, software or a combination thereof, having multiple conference input channels;
a second node having data access to at least an output signal port of the conference bridging switch, software, or a combination thereof, and
a software application distributed wholly to the first or second node, or in parts to the first and second node, the application used to apply the who is speaking indications to output communications, data files, or data streams, forwarded to one of, a select potion of, or combination of, the conference participants, non-participant third parties, and one or more storage facilities.

2. The system of claim 1, wherein the who-is-speaking indication includes, in addition to identification information, presence information or a locator thereto, the presence information relevant to the identification information.

3. An audio content transcription and annotation system for rendering annotated text transcription of live or recorded speech from a multiparty conference session enabled by a conference bridging switch, software, or a combination thereof having multiple conference input channels and for annotating the transcribed text files with who-is-speaking data including:
an input port for receiving the audio content;
a time synchronization module for recording temporal offsets of changes in a channel activity signal relevant to conference session run time;
a channel to speaker association module; and
a text annotation engine;
**characterized in that** the transcribed text files are annotated according to indication of signal changes over time with relevance to audible words, phrases or segments of the content found within the scope of time periods existing in between the signal changes.

4. The system of claim 3, wherein the who-is-speaking indication includes, in addition to identification information, presence information or a locator thereto, the presence information relevant to the identification information.

5. The system of claim 4, further including rich presence information or a locator thereto, the rich presence information wholly or partly derived from recorded activity of the identified participant over the duration of one or more conference sessions.

6. A method for transcribing and annotating live or recorded speech from a multiparty conference session enabled by a conference bridging switch, software, or a combination thereof having multiple conference input channels, the annotations indicative of who-is-speaking including steps for:
(a) receiving the speech files for text transcription;
(b) accessing a channel activity signal temporally associated with the speech files;
(c) inserting fields or place holders into the documents during text transcription, the fields or placeholders inserted according to time of occurrence in the document;
(d) retrieving channel-to-speaker association data for each field or placeholder; and,(e) inserting the annotations into the appropriate fields.

7. The method of claim 6, wherein in step (e) the annotations further include presence information about the speaker, or a locator thereto, the presence information including but not limited to contact information.

8. The method of claim 7, wherein in step (e) the annotations further include rich presence information about the speaker, or a locator thereto, the rich presence information including, but not limited to statistics related to speaker activity over the duration of one or more than one conference.

9. A system for searching conference archives for information relevant to recorded content of a multiparty conference, the record temporally annotated with speaker identification and other information or locators thereto including:
a first node hosting a search engine and interface;
a second node capable of accessing the first node over a network; and
at least one repository containing the conference records in the form of transcribed text files linked or not linked to appropriate multimedia audio files or audio/video files;
**characterized in that** information searched may include speaker identifications using content keywords or phrasing as input, instances of repeated content spoken by a speaker using a combination of speaker identification parameters and content keywords or phrasing as input, and rich presence information including statistics using speaker identification as input.

10. The system of claim 9, wherein the searched information is returned as a list of one or more interactive results further optimized by additional interactive links to additional information relevant to the results.
